Europäisches Patentamt

European Patent Office

Office européen des brevets

(19)

(11) **EP 1 523 167 A2**

(12) **EUROPÄISCHE PATENTANMELDUNG**

(43) Veröffentlichungstag:
**13.04.2005  Patentblatt 2005/15**

(51) Int Cl.7: **H04M 15/00**, G06F 17/60,
H04L 12/14, G06F 17/00

(21) Anmeldenummer: **04077407.7**

(22) Anmeldetag: **20.08.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **05.09.2003  DE 10341903**

(71) Anmelder: **SIEMENS AKTIENGESELLSCHAFT**
**80333 München (DE)**

(72) Erfinder:
• **Burghardt, Frank, Dr.**
  **13125 Berlin (DE)**
• **Kastelewicz, Georg, Dr.**
  **10179 Berlin (DE)**
• **Kim, Peter, Dr.**
  **12623 Berlin (DE)**
• **Kissner, Martin**
  **16766 Kremmen (DE)**

(54) **Verfahren zur Vergebührung eines Dienstes in einem Telekommunikations-/Datennetz**

(57)      Verfahren zur Vergebührung eines Dienstes in einem Telekommunikations-/Datennetz, insbesondere UMTS-Mobilfunknetz, wobei abbuchungsrelevante Vorgänge auf Netzelementen, die eine Abbuchungs-Schnittstelle implementieren, mittels eines angepassten Übertragungsprotokolls zu einem Abbuchungssystem übertragen werden, wobei als Übertragungsprotokoll ein Hot-Billing Protokoll eingesetzt wird, das eine Terminierungsmeldung des Abbuchungssystems unterstützt, wobei ein am Abbuchungsvorgang beteiligtes Netzelement zu Beginn und bei Beendigung des Dienstes jeweils eine Meldung an das Abbuchungssystem sendet und parallel zur Dienstausführung der Dienst im Abbuchungssystem zeitlich gemessen und eine Abbuchung im Ansprechen auf das Messergebnis ausgeführt wird.

# FIG 1

**Beschreibung**

Die Erfindung betrifft ein Verfahren zur Vergebührung eines Dienstes in einem Telekommunikations-/Datennetz nach dem Oberbegriff des Anspruchs 1.

Die Vergebührung von Telekommunikationsleistungen und Datendiensten auf der Grundlage eines vorausbezahlten Guthabens (Prepaid-Basis) stellt inzwischen einen etablierten Vergebührungsmechanismus dar und ist im Zusammenhang mit dem zunehmenden Angebot von Informationen, Produkten und Dienstleistungen über Mobilfunknetze der dritten Generation von hoher wirtschaftlicher Bedeutung. Besondere Akzente liegen dabei auf der Gewährleistung einer hohen Genauigkeit und Sicherheit der Vergebührung, sowohl von zeitbasiert wie auch von volumenbasiert abgerechneten Diensten. Die stark zunehmende Anzahl von in derartigen Systemen eingebundenen Partnern - Anbietern (Merchants), Kunden (Consumers), Payment Service Providers, Wireless Application Service Providers, Advertisers, Portal Providers etc. - erfordert dabei den Einsatz von standardisierten Schnittstellen und Protokollen mit möglichst hoher Flexibilität in Bezug auf deren spezifische Anforderungen und Systemvoraussetzungen.

Grundsätzlich ist festzustellen, dass zur Vergebührung von Diensten, die eine Kreditüberwachung erfordern, vergebührungsrelevante Vorgänge auf Netzelementen des TK-/Datennetzes mittels eines geeigneten Protokolls zu einem Vergebührungssystem (Charging System) übertragen werden. Die hierfür bekannten Protokolle lassen sich in drei Gruppen mit folgenden Merkmalen zusammenfassen:

- Offline Charging oder Ticketing: Die Meldungen werden am Netzelement gesammelt, und im Abbuchungssystem zu einem späteren Zeitpunkt anhand der enthaltenen Zeitstempel gemessen und gecharged.
- Online Charging: Nachdem das Netzelement eine Start-Meldung gesendet hat, wartet es mit der Ausführung des Dienstes auf eine Rückantwort des Abbuchungssystems.
- Hot Billing: Das Netzelement sendet eine Meldung zu Beginn und am Ende des Dienstes, der Dienst wird im Abbuchungssystem parallel zur Serviceausführung zeitlich gemessen und gecharged. Für volumenorientiert gemessene Services wird in jeder Nachricht ein Snapshot des Volumen-Counters übermittelt.

Für Prepaid-Systeme ist derzeit der Einsatz eines Online Charging Protokolls erforderlich. Hierbei ist es erforderlich, dass das in einen Vergebührungsvorgang involvierte Netzelement selbst den Zustand des bezüglich seiner zeitlichen Dimension zu messenden Dienstes kennt. Zudem tragen bei diesen Systemen die Schnittstellen (Charging Interfaces) eine relativ hohe Verarbeitungslast.

Der Erfindung liegt die Aufgabe zugrunde, ein verbessertes Verfahren der gattungsgemäßen Art anzugeben, welches insbesondere eine vereinfachte Systemgestaltung und eine Reduzierung der Verarbeitungslast auf den Netzelementen ermöglicht.

Diese Aufgabe wird durch ein Verfahren mit den Merkmalen des Anspruchs 1 gelöst. Zweckmäßige Fortbildungen des Erfindungsgedankens sind Gegenstand der abhängigen Ansprüche.

Ein wesentlicher Gedanke der Erfindung ist, dass - entgegen den bisher eingebürgerten Vorstellungen - für ein Vergebührungssystem mit Kreditüberwachung, insbesondere ein Prepaid-System auch ein Hot Billing Protokoll verwendet werden kann, sofern bestimmte Bedingungen erfüllt sind. Hiermit ist eine Vergebührung auf Prepaid-Basis (Prepaid Charging) mit den üblichen Eigenschaften zu realisieren, nämlich

- einer sekundengenauen Unterbrechung des Dienstes beim Ablaufen des Prepaid-Guthabens bzw. Credits und
- der Möglichkeit, das Ende des Dienstes a priori zu bestimmen, so dass keine zeitzyklischen Abbuchungen erforderlich sind.

Ein wesentlicher Vorteil des vorgeschlagenen Verfahrens/System besteht darin, dass seine Einfachheit die Anwendung auf mehr Netzelemente ermöglicht. Insbesondere ist es nicht mehr notwendig, dass das Netzelement selbst den Zustand eines zeitlich zu messenden Services kennt, sondern es muss lediglich einen Beginn oder ein Ende erkennen. Dadurch eignet sich das vorgestellte Verfahren für verteilte Systeme (in denen ein Pool von Netzelementen die Bereitstellung eines Services übernimmt). Es entsteht ausserdem weniger Last auf dem Charging Interface. Dieses Verfahren ist daher insbesondere für IP basierte session-orientierte Dienste (z.B. Video call, voice call, streaming) geeignet, die kostenoptimierte Infrastruktur erfordern.

In einer bevorzugten Ausführung der Erfindung wird als Übertragungsprotokoll das IETF Diameter Protokoll eingesetzt. Weiterhin kann als Übertragungsprotokoll in Verbindung mit dem durch 3GPP definierten Rf Interface, das Standard-Diameter Protokoll unter zusätzlicher Nutzung der darin vorgesehenen Terminierungsmeldung eingesetzt werden.

Für Credit Control muss gefordert werden, daß das Hot Billing Protokoll eine Terminierungsmeldung (ABORT) seitens des Charging Systems unterstützt. Diese Terminierungsmeldung ist eine von den übrigen Protokollmeldungen unabhängige Terminierungsmeldung. Die Terminierungsmeldung kann also zu beliebigen Zeitpunkten von dem Abbuchungssystem an ein am Abbuchungsvorgang beteiligtes Netzelement gesendet werden. Eine solche Terminierungsmeldung kann auch als eine "freilaufende Terminierungsmeldung", "unabhängige Terminierungsmeldung", "independent termination message", "independent abort message" oder "out-of-regular-flow-message" bezeichnet werden. Die freilaufende Terminierungsmeldung wird vom Server (Abbuchungssystem, Abrechnungssystem) an das Netzelement gesendet. Durch die freilaufende Terminierungsmeldung wird die Erbringung des Dienstes (Service) beendet; dadurch ändert sich der danach erfolgende Meldungsaustausch zwischen dem Abbuchungssystem bzw. Abrechnungssystem und dem Netzelement. Das erfindungsgemäße Verfahren kann also so ausgestaltet sein, dass als Übertragungsprotokoll ein Hot-Billing Protokoll eingesetzt wird, das eine freilaufende Terminierungsmeldung des Abbuchungssystems unterstützt.Für das Charging eines volumenbasiert abgerechneten Dienstes wird zusätzlich verlangt, dass eine Interimsmeldung nach einem maximal zulässigen transferierten Volumen angefordert werden kann. Dabei ist es unerheblich, ob das maximal zulässige Volumen dynamisch durch die Antwort auf die Start/Interim Requests oder statisch vereinbart wird.

Für eine mögliche Realisierung wird vorausgesetzt, dass es im Abbuchungssystem einen Wake-up-Service gibt, der eine Servicelogik anhand eines vorher eingetragenen Termins sekundengenau aktivieren kann.

Da ein mögliches Delay von der Anzahl der Weckrufe in einer Zeiteinheit abhängt, soll verabredet werden, daß beim Eintragen des Weckrufs bereits für diese Zeitspanne vorliegende Weckaufträge berücksichtigt werden. Wird eine maximale Anzahl Weckaufträge je Zeiteinheit überschritten, wird der Weckauftrag zu einem früheren Termin eingetragen.

Es wird ferner vorausgesetzt, daß eine zweite Vergebührungslogik den Kontext einer ersten Vergebührungslogik einsehen kann. Die erste Logik kann sich in Ruhe befinden oder gleichzeitig aktiv sein.

Es ist vorteilhaft, wenn die Weckzeit eines ersten Services durch einen zweiten Service neuberechnet und verändert werden kann. Diese Voraussetzung ist nicht zwingend, eine alternative Strategie dazu wird behandelt. Dazu wird ein Hilfsservice konstruiert, der durch einen Weckauftrag aktiviert werden kann und eine Neuberechnung der Servicelaufzeit ausführen kann. Eine Abbuchung des "verbrauchten" Guthabens kann dabei erfolgen. Der Hilfsservice wird nur dann benötigt, wenn die Weckzeit eines Services durch einen anderen Service nicht verändert werden kann.

Es ist auch von Vorteil, dass ein erster Service durch einen zweiten Service "geweckt" werden kann, um ein bis dahin verbrauchtes Guthaben abzurechnen. Auch diese Voraussetzung ist nicht zwingend, da der zweite Service unter den genannten Voraussetzungen den abzurechnenden Betrag selber errechnen und berücksichtigen kann, ohne dass er tatsächlich zu diesem Zeitpunkt gebucht wird. In der Erläuterung der Berechnungen wird angenommen, dass diese Voraussetzung erfüllt ist.

Generell wird vorausgesetzt, dass ein Service vom Netzelement frühestens nach der doppelten Zeit freigegeben (gestartet) wird, die für die Übertragung einer Meldung vom Netzelement zum Charging System notwendig ist. Diese Voraussetzung ist notwendig, um einen Service vor dem Beginn zu terminieren, im Falle dass kein erforderliches Guthaben zu Beginn der Übertragung zur Verfügung steht. Sie entfällt, wenn auf eine Rückantwort auf den Request gewartet wird.

Zur Erläuterung des Prinzips des vorgeschlagenen Verfahrens sowie zur Illustration eines Ausführungsbeispiels dienen die Figuren. Von diesen zeigen:

Fig. 1 eine schematische Darstellung der Systemverknüpfung zwischen TK-/Datennetz und Vergebührungssystem beim Ablauf einer Vergebührung,

Fig. 2 den möglichen Ablauf einer Vergebührung unter Einsatz des IETF-Diameter-Protokolls und

Fig. 3 eine schematische Darstellung der Vergebührung eines Pools von http Servern als Ausführungsbeispiel der Erfindung.

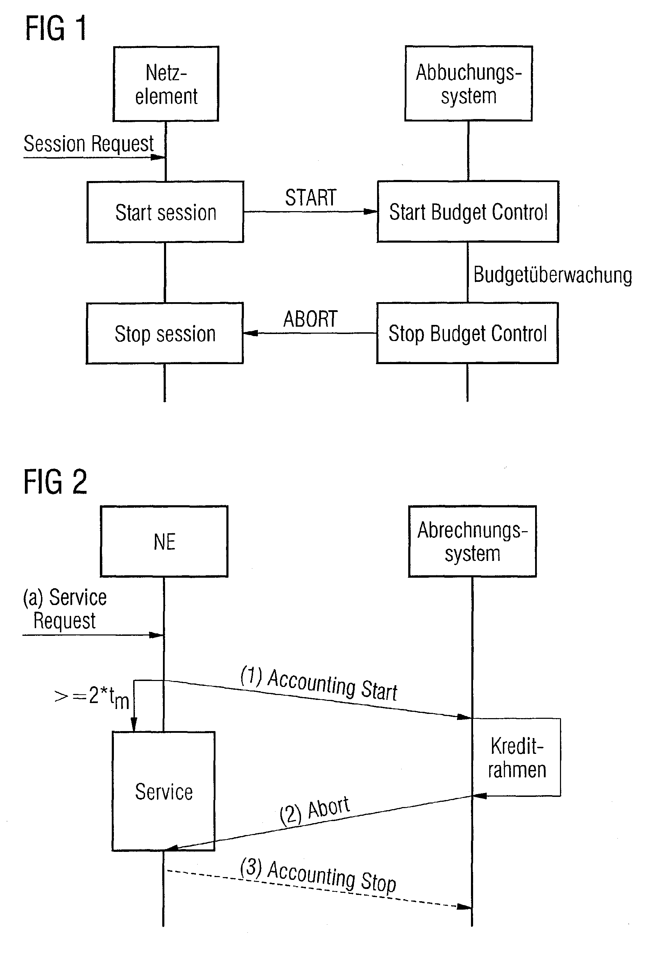

Fig. 1 zeigt, wie ein an einem gebührenpflichtigen Dienst beteiligtes Netzelement nach Anforderung einer Dienstausführung (Session Request) bei Beginn der Dienstausführung (Start Sesstion) ein Signal START an das zugeordnete Abbuchungssystem gibt, wo eine Budgetüberwachung gestartet wird (Start Budget Control). Am Ende der Budgetüberwachung - etwa bei Erschöpfung des Prepaid-Guthabens - (Stop Budget Control) gibt das Abbuchungssystem an das Netzelement ein Signal ABORT aus, was dort eine Beendigung der Dienstausführung (Stop Session) bewirkt.

Fig. 2 zeigt einen möglichen Ablauf einer Vergebührung mittels IETF-Diameter und zwar einen zeitbasierten Service, der jedoch in ähnlicher Weise auch volumenorientiert ausgeführt werden kann. Die beteiligten Systeme sind wieder ein Netzelement NE und ein geeignetes Abrechnungssystem. Wird ein Service bei dem NE angefordert (a Service Request), sendet das NE zunächst einen Accounting Start Request (1) zum Abrechnungssystem. Dieses setzt aufgrund des aktuellen Kreditrahmens einen maximal möglichen Endzeitpunkt des Services fest ("Kreditrahmen").

Das Netzelement NE stellt den Service frühestens nach einer Vezögerung bereit, die minimal der doppelten Laufzeit des Accounting Start Requests entspricht ($2*t_m$; in der Praxis konfigurierbar). Nach regulärer Beendigung des bereitgestellten Services würde das NE einen Accounting Stop Request (3) senden.

Da jedoch in dem in Fig. 2 gezeigten Beispiel der Kreditrahmen früher erreicht wird, sendet das Abrechnungssystem zu dem vorher festgelegten Zeitpunkt ein Abort Request (2), das zu einer unmittelbaren Terminierung des Service im NE führt.

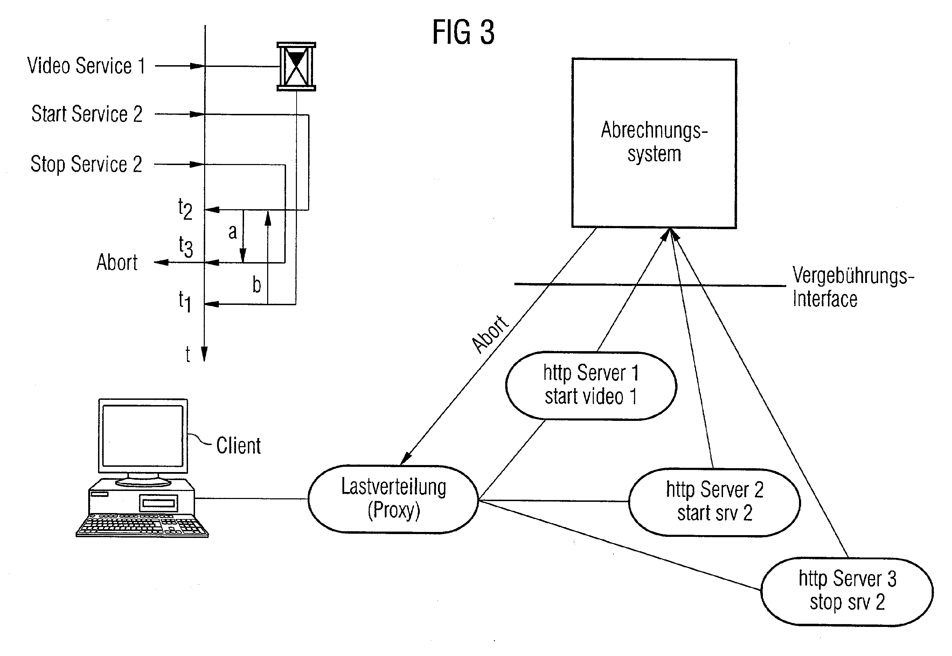

Fig. 3 zeigt in schematischer Darstellung eine Gruppe von drei http Servern im Zusammenwirken mit einem die Lastverteilung realisierenden Proxy bei der verschachtelten Ausführung zweier Dienste für einen Client, die durch ein über ein Vergebührungs-Interface mit dem Rechnernetz verknüpftes Abrechnungssystem vergebührt werden. Die Vergebührung folgt den oben erläuterten Prinzipien.

Bei der gezeigten Mehrserver-Konfiguration wird ein Kreditrahmen von mehreren Services unabhängig voneinander in Anspruch genommen. Es wird vorausgesetzt, dass der Kommunikationsfluss vom Client zunächst über einen Lastverteiler läuft, der die bereitstellenden Server 1..3 in den Ablauf einbezieht. Der Service "Video Service 1" wird ausschließlich vom http-Server 2 bereitgestellt, während der "Service 2" entsprechend einem Lastverteilungsschema von Server 2 und 3 bereitgestellt wird.

Angenommen wird nun, dass der Client den Video Service 1 als erstes startet. Das Abrechnungssystem berechnet nun aufgrund des vorhandenen Kreditrahmens eine maximal mögliche Nutzungsdauer mit Endzeitpunkt $t_1$. Zu einem etwas späteren Zeitpunkt startet der Nutzer den Service 2, was dem Abrechnungssystem (zufälligerweise) vom Server 2 mitgeteilt wird. Daraufhin verringert sich der mögliche Nutzungszeitraum um den Betrag b (im Diagramm Pfeil aufwärts). Der neue berechnete Endzeitpunkt ist nun $t_2$.

Wenn der Service 2 wieder beendet wird, fällt ein Kostenfaktor hinweg und der restliche Kreditrahmen reicht nun wieder für einen um den Betrag a längeren Zeitraum. Das ist im Diagramm durch einen Pfeil abwärts dargestellt. Der Endpunkt ist nun $t_3$.

Zum Zeitpunkt $t_3$ wird nun ein Abort gesendet. Im Bild dargestellt ist das Senden des Abort Requests an den Lastverteiler, um einen verteilt bereitgestellten Service (wie Service 2) beenden zu können.

Mit dem erfindungsgemäßen Verfahren lassen sich sowohl zeitbasierte als auch volumenbasierte Dienste in einfacher und präziser Weise vergebühren, und zwar auch für den Fall, dass während der Ausführung eines ersten Dienstes der einen oder anderen Art ein zweiter hinzukommt. Nachfolgend werden diese wichtigen Anwendungsfälle ausführlicher erläutert.

Ablauf bei Charging eines zeitbasierten Services

Der Vergebührungsserver (Charging Server) erhält ein Start Request, wenn ein Service auf dem Netzelement gestartet wird. Mittels Rating wird der Tarif s (Geld/Zeiteinheit) ermittelt. Das Guthaben c des Nutzers ist bekannt. Die mögliche Nutzungszeit ergibt sich daher aus

$$t = c/s$$

Der Service stellt daher einen Weckauftag mit now() + t.
Wird vor t ein Stop Request empfangen, wird die Gebühr entsprechend berechnet und gebucht.

Andernfalls wird die Charging Logik durch den Weckauftrag aktiviert, und es muss eine Termination gesendet werden.

Die Terminierung ist sekundengenau, weil die Laufzeit der Charging Logik und deren mögliche Abweichungen vorher bekannt ist und beim Eintragen der Weckzeit berücksichtigt werden kann. Die Terminierung kann vorrangig bearbeitet werden.

Eine zwischenzeitliche Neuberechnung ist nur bei Eintreffen von externen Requests erforderlich, die eine Änderung von Parametern bewirken können und daher ein Re-Rating und eine Neubestimmung der Laufzeit erforderlich machen.

Ablauf bei der Vergebührung eines hinzukommenden zeitbasierten Services

Kommt zu einem laufenden zeitbasierten Service ein zweiter zeitbasierter Service hinzu, muß eine Neuberechnung der möglichen Laufzeit erfolgen, da das Guthaben auf beide Services verteilt werden muss.

Der Service wird wiederum mittels Start Request gemeldet. Die Tarife s1 und s2 sind bekannt. Das Restguthaben c des Nutzers zu diesem Zeitpunkt ist bekannt (dazu erfolgt einfacherweise eine Verrechnung des bereits verbrauchten Guthabens durch den ersten Service).

Zur Ermittlung der Daten ist zumindest ein lesender Zugriff auf den Kontext des ersten Service erforderlich (alternative Strategie für fehlende Möglichkeit des schreibenden Zugriffs siehe unten).

Die Laufzeiten ergeben sich wie folgt:

$$t1 = c1/s1$$

$$t2 = c2/s2$$

$$c = c1 + c2$$

Nun soll die maximal mögliche Laufzeit unter gleichzeitiger Verwendung beider Services ermittelt werden.

$$t1 = t2$$

$$c1/s1 = c2/s2$$

Unter Verwendung von c= c1 + c2 ergibt sich

$$c1 = c * s1 / (s1 + s2)$$

Alle Angaben auf der rechten Seite sind bekannt. Die Werte c2 und t1 können durch die oben angegebenen Formeln aus dem Resultat ermittelt werden.

Nun wird für die beiden Services die neue Weckzeit now () + t1 eingetragen. Beide Services müssen zum angegebenen Zeitpunkt terminiert werden. Es ist keine zwischenzeitliche Aktivierung notwendig.

Wenn die Änderung der Weckzeit eines ersten Services aus einer zweiten Vergebührungslogik nicht möglich ist, muß ein geeignetes Guthaben vorgehalten werden. Daher wird nicht das gesamte Guthaben des Nutzers eingesetzt, sondern nur ein Teil (z.B. 20%, mit einem gewissen Minimum). Läuft diese Zeit ab, wird durch den Service selbst mittels des erwähnten Hilfsservices eine Neuberechnung des Endzeitpunkts durchgeführt. Dieses Verfahren erfordert eine periodische Aktivierung der Services. Diese Ersatzlösung kann die Nutzung eines zweiten Services blockieren, auch wenn genügend Guthaben auf dem Konto verfügbar ist.

Ablauf bei der Vergebührung eines hinzukommenden volumen-basierten Services

Ein volumenbasierter Dienst kann nur durch das Netzelement gemessen werden. Dazu wird das granted-unit Verfahren verwendet, bei dem dem Netzelement periodisch ein Volumen zur Verfügung gestellt wird. Jede "Scheibe" besitzt ein durch das Charging System festgelegtes Volumen und eine maximale zeitliche Ausdehnung. Beim Eintreffen eines Start-Requests wird daher ein adäquates Volumen und eine entsprechende Geldmenge reserviert. Dies hat Auswirkungen auf die Laufzeit eines bereits laufenden, zeitbasierten Services.

Die Bestimmung des Reservierungsbetrags für den volumenbasierten Service erfordert u.a. die Kenntnis des maximalen Durchsatzes per Zeiteinheit dmax. Das reservierte Volumen sei

$$v = dmax * t2$$

wobei wiederum

$$t1 = t2$$

gelten soll.

Es wird auch wieder zur Vereinfachung vorausgesetzt, dass bereits verbrauchtes Guthaben zu diesem Zeitpunkt abgerechnet wurde. Das Guthaben verteilt sich nun auf den (ersten) zeitbasierten und den (zweiten) volumenbasierten Service:

$$t1 = c1/s1$$

$$c2 < dmax * t2 * s2$$

wobei der Tarif s2 die Einheit Geldmange je Volumeneinheit trägt.

Ausserdem gilt c = c1 + c2.

Durch Einsetzen erhält man

$$c2 < dmax * ((c-c2)/s1) * s2$$

Der einheitenlose Koeffizient dmax * s2/s1 soll als k bezeichnet werden.

$$c2 < k * (c-c2)$$

Da alle Werte positiv sind, erhält man durch Umstellen

$$c2 < c * k / (k+1)$$

Das heisst, dass das zu reservierende Guthaben durch die rechte Seite limitiert ist. Es ist aus bekannten Werten berechenbar. Die übrigen Werte t1, t2, c1 ergeben sich durch Einsetzen des Wertes c2 in die Gleichungen oben.

Diese Formel gilt für eine "letzte Scheibe", d. h. das zu reservierende Volumen c2 kann aus anderen Bedingungen heraus (z.B. maximal zu reservierendes Volumen für eine Scheibe oder maximale zeitliche Ausdehnung einer Scheibe) geringer sein. Bei jeder Zwischenmeldung (interim message) muß dann eine Neubestimmung der Werte und Laufzeiten stattfinden.

Für die jeweils nächste Scheibe ist daher die maximale Restlaufzeit beider Services aus der angegebenen Formel berechenbar. Durch einen entsprechenden Weckauftrag kann der erste Service sekundengenau terminiert werden.

Dieses Verfahren für sich allein hat den Nachteil, dass ein Restbetrag aus dem volumenbasierten Service nicht berücksichtigt wird. Für volumenbasiert abgerechnete Services ist es jedoch typisch, dass der Service über längere Zeit "ruht" und keine Gebühr anfällt. Der Restbetrag wird groß, wenn eine große Scheibe c2 gewählt wird, aber durch den Service gar kein Volumen entsteht.

Daher wird vorgeschlagen, für den volumenbasierten Service eine Scheibengröße zu wählen, die in Abhängigkeit vom verfügbaren Restguthaben und dem zu erwartenden entstehenden Volumen steht (z.B. aus dem bisherigen Nutzerverhalten), d.h. c2 wird nicht nur durch die oben angegebene Formel begrenzt, sondern unter Berücksichtigung eines bestimmten Minimums auch durch einen Faktor f mit f < 100%:

$$c2 < c * k /(k+1) * f$$

Die Neuberechnung der Laufzeiten bestehender Services erfolgt bei jeder Interim-Meldung des volumenbasiert abgerechneten Services.

Die Ausführung der Erfindung ist nicht auf diese Anwendungsfälle und die weiter oben erwähnten Systemkonfigurationen beschränkt, sondern ebenso in einer Vielzahl von Abwandlungen möglich, die im Rahmen fachgemäßen Handelns liegen.

**Patentansprüche**

1. Verfahren zur Vergebührung eines Dienstes in einem Telekommunikations-/Datennetz, insbesondere UMTS-Mobilfunknetz, wobei abbuchungsrelevante Vorgänge auf Netzelementen, die eine Abbuchungs-Schnittstelle implementieren, mittels eines angepassten Übertragungsprotokolls zu einem Abbuchungssystem übertragen werden,
   **dadurch gekennzeichnet, dass**
   als Übertragungsprotokoll ein Hot-Billing Protokoll eingesetzt wird, das eine Terminierungsmeldung des Abbuchungssystems unterstützt, wobei
   ein am Abbuchungsvorgang beteiligtes Netzelement zu Beginn und bei Beendigung des Dienstes jeweils eine Meldung an das Abbuchungssystem sendet und parallel zur Dienstausführung der Dienst im Abbuchungssystem zeitlich gemessen und eine Abbuchung im Ansprechen auf das Messergebnis ausgeführt wird.

2. Verfahren nach Anspruch 1,
   **dadurch gekennzeichnet, dass**
   als Übertragungsprotokoll das IETF Diameter Protokoll eingesetzt wird.

3. Verfahren nach Anspruch 1,
   **dadurch gekennzeichnet, dass**
   als Übertragungsprotokoll in Verbindung mit dem durch 3GPP definierten Rf Interface, das Standard-Diameter Protokoll unter zusätzlicher Nutzung der darin vorgesehenen Terminierungsmeldung eingesetzt wird.

4. Verfahren nach einem der vorangehenden Ansprüche,
   **dadurch gekennzeichnet, dass**
   es sich bei dem Dienst um einen IP-basierten, session-orientierten Dienst, insbesondere einen Voice-Call, Video-Call oder Streaming-Dienst handelt.

5. Verfahren nach einem der vorangehenden Ansprüche,
   **dadurch gekennzeichnet, dass**
   es sich bei dem Dienst um einen volumenbasiert vergebührten Dienst handelt und das Übertragungsprotokoll die Anforderung einer Zwischenmeldung nach Übertragung eines vorbestimmten Datenvolumens ermöglicht.

6. Verfahren nach einem der vorangehenden Ansprüche,
   **dadurch gekennzeichnet, dass**
   im Abbuchungssystem eine erste und zweite Vergebührungslogik implementiert sind, wobei die zweite Vergebührungslogik den Kontext der ersten Abbuchungslogik einsehen kann.

7. Verfahren nach einem der vorangehenden Ansprüche,
   **dadurch gekennzeichnet, dass**
   im Abbuchungssystem ein Wakeup-Dienst zur präzisen zeitgesteuerten Aktivierung einer Dienstlogik implementiert ist.

8. Verfahren nach Anspruch 7,
   **dadurch gekennzeichnet, dass**
   im Abbuchungssystem ein Weckzeit-Einstelldienst zur Neuberechnung und Veränderung der Weckzeit des Wakeup-Dienstes implementiert ist.

9. Verfahren nach einem der vorangehenden Ansprüche,
   **dadurch gekennzeichnet, dass**
   die mögliche Nutzungszeit eines zeitbasiert vergebührten Dienstes bei Nutzungsbeginn aufgrund des Betrages eines Prepaid-Guthabens bestimmt wird.

10. Verfahren nach einem der vorangehenden Ansprüche,
    **gekennzeichnet durch**
    die Ausführung in über das Telekommunikations-/Datennetz verteilter Weise.

## FIG 1

| Netz-element | | Abbuchungs-system |
|---|---|---|

Session Request →

Start session — START → Start Budget Control

Budgetüberwachung

Stop session ← ABORT — Stop Budget Control

## FIG 2

| NE | | Abrechnungs-system |
|---|---|---|

(a) Service Request →

$>= 2*t_m$

(1) Accounting Start

Service

Kredit-rahmen

(2) Abort

(3) Accounting Stop

## FIG 3

Video Service 1 →

Start Service 2 →

Stop Service 2 →

$t_2$

a

$t_3$

Abort →

b

$t_1$

t

Client

Lastverteilung (Proxy)

Abort

http Server 1 start video 1

http Server 2 start srv 2

http Server 3 stop srv 2

Abrechnungs-system

Vergebührungs-Interface

EP 1 523 167 A2